Europäisches Patentamt

European Patent Office

Office européen des brevets

(11) Numéro de publication: **0 306 070 B1**

(12) **FASCICULE DE BREVET EUROPEEN**

(45) Date de publication de fascicule du brevet:
**27.12.91**

(21) Numéro de dépôt: **88201668.6**

(22) Date de dépôt: **02.08.88**

(51) Int. Cl.⁵: **B29C 33/38**, B29C 59/04,
B29C 65/00, B29D 31/00

(54) **Procédé pour la production d'un cylindre de grainage à chaud de feuilles thermoplastiques.**

(30) Priorité: **13.08.87 FR 8711574**

(43) Date de publication de la demande:
**08.03.89 Bulletin 89/10**

(45) Mention de la délivrance du brevet:
**27.12.91 Bulletin 91/52**

(84) Etats contractants désignés:
**AT BE CH DE ES GB GR IT LI LU NL SE**

(56) Documents cités:
**EP-A- 0 144 541     EP-A- 0 154 141
DE-A- 3 332 460     FR-A- 2 377 263
US-A- 4 250 135     US-A- 4 283 240**

(73) Titulaire: **GRIFFINE-MARECHAL (Société Anonyme)
5, rue François Ier
F-75383 Paris Cedex 08(FR)**

(72) Inventeur: **Capra, Jean-Claude
Saint-Jost Chaleyssin
F-38540 Heyrieux(FR)**

(74) Mandataire: **Bouchoms, Maurice et al
Solvay & Cie Département de la propriété
industrielle 310, rue de Ransbeek
B-1120 Bruxelles(BE)**

Rank Xerox (UK) Business Services

## Description

La présente invention concerne un procédé pour la production d'un cylindre de grainage à chaud de feuilles thermoplastiques qui convient particulièrement pour la production de grainage fins tels que des grainages reproduisant l'aspect du cuir naturel.

Il a déjà été proposé notamment dans le brevet belge 627 863, dans le brevet britannique 1 158 471 et dans le brevet français 1 538 506 de réaliser des surfaces de grainage telles que des cylindres de grainage permettant la reproduction de grains très fins tels que ceux conduisant à un aspect de cuir naturel en faisant appel à des empreintes de grainage obtenues par le recours à des résines de silicone.

Selon cette technique, une résine de silicone liquide vulcanisable est versée sur un modèle de grainage à reproduire tel qu'une peau de cuir naturel et, après durcissement de la résine, on sépare la couche de résine de silicone durcie du modèle de façon à obtenir une empreinte en négatif de la texture superficielle du modèle, cette empreinte pouvant alors être fixée sur un cylindre métallique pour obtenir un cylindre de grainage convenant pour le traitement de feuilles thermoplastiques chaudes ou préchauffées.

Toutefois lorsque le modèle à reproduire, comme c'est le cas par exemple pour une peau de cuir naturel, ne présente pas une grande surface, il n'est pas possible avec une seule empreinte en silicone de garnir la totalité de la périphérie d'un cylindre de grainage utilisable pour le traitement de feuilles thermoplastiques de grande largeur.

En outre, dans le cas où on utilise comme modèle de grainage une peau de cuir naturel, il n'est généralement pas souhaitable d'exploiter la totalité de l'empreinte en résine de silicone obtenue car les peaux présentent des parties de texture plus grossière, par exemple au niveau de l'épine dorsale, et comportent souvent de petits défauts locaux.

De ce fait, on est souvent amené à devoir choisir uniquement des portions d'empreinte qui doivent être assemblées bords à bords pour obtenir une surface suffisante pour pouvoir garnir un cylindre de grainage de dimensions industriellement acceptables.

Dans la pratique, on opère généralement selon une technologie qui consiste, après le choix de la ou des portions acceptables de l'empreinte en résine de silicones, à produire une pluralité d'empreintes positives par application de cette ou ces portions sous pression sur des portions de feuilles thermoplastiques chaudes telles que par exemple des portions de feuilles en résine à base de chlorure de vinyle. Les empreintes positives ainsi obtenues sont alors assemblées bords à bords de façon judicieuse généralement par soudage pour obtenir une surface suffisante dont on raccorde ensuite les extrémités de façon à former un manchon sur lequel on coule une nouvelle couche de résine de silicone vulcanisable pour réaliser un manchon en silicone reproduisant l'empreinte en négatif qui est alors utilisé pour garnir le cylindre de grainage désiré.

Il apparaît toutefois que cette technologie conduit à la formation d'une pluralité de joints de raccordement au niveau des assemblages de l'empreinte positive en résine thermoplastique qui doivent être supprimés avant la prise de l'empreinte finale en résine de silicone pour obtenir un cylindre de grainage acceptable.

Pour atteindre ce résultat on utilise jusqu'à présent une roulette métallique de postgrainage qui comporte une gravure du motif de grainage ladite roulette étant appliquée sous pression et chaleur sur les différents joints à supprimer.

La gravure de la roulette métallique de postgrainage exige toutefois le recours à des spécialistes hautement qualifiés pour obtenir un résultat pouvant être acceptable et sa réalisation, qui demande un temps considérable, est dès lors très coûteuse.

Selon un autre procédé, décrit dans le document EP-A-0144541, les joints sont supprimés par pressage simultané et à chaud des régions de l'empreinte positive thermoplastique comportant les joints avec une portion de l'empreinte positive en résine de silicone. Ce procédé supprime certes les joints mais crée des cassures dans le grain au niveau des bords des portions de l'empreinte positive utilisées.

La présente invention à, dès lors, pour objet de fournir un procédé pour la production d'un cylindre de grainage à chaud de feuilles thermoplastiques selon la technologie décrite ci-avant qui ne nécessite plus le recours à des spécialistes pour réaliser la suppression des joints de raccordement et qui conduit à un produit présentant un grain continu.

L'invention concerne dès lors un procédé pour la production d'un cylindre de grainage à chaud de feuilles thermoplastiques comportant les étapes suivantes :

a) réalisation d'une empreinte négative du motif de grainage à reproduire par coulage, durcissement et arrachage d'une résine de silicone déposée sur un modèle de grainage tel qu'une peau de cuir naturel

b) production d'au moins une empreinte positive par pressage à chaud de l'empreinte négative sur une feuille de matière thermoplastique

c) découpage dans la ou les empreintes positives d'une série de plages, de forme générale rectangulaire, comportant les motifs choisis à reproduire par grainage et assemblage par soudage bords à bords des plages choisies pour réaliser une surface grainée positivement suffisante pour pouvoir recouvrir la surface du cylindre de grainage désiré, ladite surface comportant des joints de raccordement.

d) assemblage bord à bord de deux extrémités de la surface pour former un manchon grainé positivement vers l'extérieur et comportant un joint de raccordement longitudinal.

e) enfilage du manchon sur un cylindre métallique et prise d'une empreinte négative à partir de résine de silicone par rotation du cylindre métallique recouvert du manchon grainé positivement de façon à obtenir un manchon en résine de silicone grainé négativement vers l'intérieur.

f) retroussement du manchon en résine de silicone pour amener le grainage négatif sur la paroi externe du manchon et fixation du manchon retroussé sur un cylindre métallique pour obtenir le cylindre de grainage désiré dans lequel, après les étapes c et d, les joints de raccordement sont postgrainés au moyen d'une roulette de postgrainage en résine thermodurcissable reproduisant le grainage en négatif dont la circonférence est supérieure à la longueur des joints à postgrainer, qui se caractérise en ce que le postgrainage des joints, au moyen de la roulette de postgrainage, est réalisé en disposant les joints à postgrainer sur une surface de support arquée transversalement.

La roulette de postgrainage est, de préférence, obtenue en garnissant la paroi latérale interne d'un conformateur cylindrique, d'une bande rapportée de longueur appropriée découpée dans une empreinte positive obtenue à l'étape b, en coulant ensuite une résine thermodurcissable dans le conformateur et en démoulant la roulette ainsi produite après durcissement de la résine thermodurcissable.

De par son mode de réalisation, la roulette de postgrainage comporte nécessairement, elle également, un joint de raccordement transversal qui découle du raccordement des extrémités de la bande rapportée disposée dans le conformateur cylindrique. Dès lors pour obtenir un cylindre de grainage de qualité il est préférable lors du postgrainage des joints de disposer la roulette de postgrainage sur la surface à postgrainer de façon telle que le joint transversal de la roulette découlant du raccordement bout à bout de la bande rapportée dans le conformateur utilisé pour sa production ne vienne pas en contact avec la surface à postgrainer. Cette précaution peut être aisément réalisée du fait que la roulette de postgrainage à une circonférence supérieure à la longueur des joints à postgrainer. En général, on préfère à cet effet que la différence de longueur entre la circonférence de la roulette de postgrainage et la longueur des joints à postgrainer soit supérieure à 20 mm et, de préférence, à 50 mm.

La matière thermoplastique constituant les feuilles utilisées pour réaliser l'empreinte positive obtenue à l'étape b ci-dessus peut être quelconque pour autant que celle-ci se prête à un grainage à chaud au moyen de l'empreinte négative en résine de silicone on préfère toutefois utiliser une résine à base de chlorure de vinyle et, dans ce cas, les feuilles thermoplastiques sont préchauffées au moins en surface à une température de 150 à 250° C avant leur grainage au moyen de l'empreinte négative en résine de silicone, cette dernière, ainsi qu'il est de pratique courante, n'étant pas préchauffée.

De même, la résine thermodurcissable utilisée pour réaliser la roulette de postgrainage peut être quelconque pour autant que celle-ci puisse, après réticulation et durcissement, reproduire en négatif le grainage positif de la bande rapportée disposée dans le conformateur. A cet effet il a été constaté que les résines de polyesters insaturées conviennent particulièrement.

La largeur de la roulette au niveau de sa périphérie de postgrainage peut varier de 20 à 150 mm et de préférence entre 40 et 100 mm.

Le fait de disposer les joints à postgrainer sur une surface arquée transversalement lors du postgrainage à l'aide de la roulette de postgrainage entraîne que la pression, exercée par la roulette de postgrainage lors du postgrainage des joints, diminue de part et d'autre du joint à postgrainer ce qui permet d'obtenir un effet de fondu lors du postgrainage des joints.

Le rayon de la surface arqueuse est généralement compris entre 0,20 et 2 mètres et, de préférence entre 0,30 et 1 mètre.

Le procédé tel que décrit ci-avant permet la fabrication économique de cylindres de grainage de qualité dans lesquels la surface de grainage est en résine de silicone. De telles cylindres de grainage conviennent particulièrement pour le grainage de films thermoplastiques tels que notamment des films en résine à base de chlorure de vinyle plastifié qui peuvent être utilisé notamment pour l'habillage interne de véhicules automobiles. Toutefois ces cylindres de grainages présentent l'inconvénient d'une usure assez rapide et leur utilisation est généralement réservée à la production de lots de film grainé inférieurs à 25000 mètres courants. Pour des productions plus importantes, on utilise de préférence des cylindres de grainage métalliques certes plus coûteux mais dont la durée de service est plus importante.

Il a été constaté que le procédé conforme à l'invention pouvait également être facilement adapté moyennant quelques modifications à la production, en variante, de cylindres de grainage métalliques.

A cet effet, le procédé comporte les étapes suivantes :

a) réalisation d'une empreinte négative du motif de grainage à reproduire par coulage, durcissement et arrachage d'une résine de silicone déposée sur un modèle de grainage tel qu'une peau de cuir naturel.

b) production d'au moins une empreinte positive par pressage à chaud de l'empreinte négative sur une feuille de matière thermoplastique.

c) découpage dans la ou les empreintes positives d'une série de plages de forme générale rectangulaires comportant les motifs choisis à reproduire par grainage et assemblage par soudage bords à bords des plages choisies pour réaliser une surface grainée positivement suffisante pour pouvoir recouvrir la surface du cylindre de grainage désiré, ladite surface comportant des joints de raccordement.

d) assemblage bord à bord de deux extrémités de la surface grainée pour former un manchon grainé positivement vers l'extérieur et comportent un joint de raccordement longitudinal.

e) postgrainage des joints de raccordement au moyen d'une roulette de postgrainage en résine thermodurcissable reproduisant le grainage en négatif et dont la circonférence est supérieure à la longueur des joints à postgrainer, lesdits joints à postgrainer étant disposés sur une surface de support arquée transversalement

caractérisé en ce qu'ensuite :

- on retrousse le manchon en matière thermoplastique pour disposer le grainage positif vers l'intérieur du manchon;
- on applique le manchon retroussé contre la paroi interne d'un cylindre métallique creux à l'intervention d'un adhésif fusible;
- on procède à la métallisation par électrolyse de la paroi interne du manchon retroussé de façon à produire un manchon métallique reproduisant le grainage en négatif;
- on extrait le manchon retroussé et le manchon métallique du cylindre métallique par fusion de l'adhésif fusible;
- on sépare le manchon retroussé du manchon métallique par arrachage et,
- on enfile et fixe le manchon métallique sur un cylindre métallique pour obtenir un cylindre de grainage métallique utilisable pour reproduire le grainage souhaité sur des feuilles thermoplastiques.

L'adhésif utilisé pour associer le manchon retroussé et le manchon métallique peut être quelconque pour autant qu'il permette, par chauffage, un dégagement ultérieure entre ces éléments. Il a été toutefois trouvé qu'une classe d'adhésifs fusibles particulièrement intéressante était constituée par les cires naturelles ou synthétiques. Cet adhésif peut être réparti dans le manchon métallique par la technique connue de centrifugation.

La métallisation du manchon retroussé est obtenue, de préférence, par des dépôts électrolytiques successifs de nickel et de cuivre, après avoir rendu le manchon retroussé conducteur par pulvérisateur d'argent sur son grainage.

La couche de nickel déposée a généralement une épaisseur de 0,2 à 1,5 mm et, de préférence de 0,5 à 0,8 mm tandis que la couche de cuivre a généralement une épaisseur de 0,5 à 2 mm et de préférence de 0,8 à 1,5 mm.

Pour extraire ensuite le manchon retroussé et le manchon métallique formé par électrolyse il suffit de porter le cylindre métallique externe à une température suffisante pour provoquer la fusion de l'adhésif fusible par exemple en exposant la paroi externe de ce cylindre à l'action d'une flamme chaude.

Lors de l'opération subséquente d'arrachage du manchon retroussé il convient évidemment de prendre les précautions d'usage pour éviter tout endommagement du manchon métallique et en particulier de son grainage.

Après arrachage du manchon retroussé, on obtient un manchon métallique dont le grainage négatif présente une grande dureté superficielle du fait qu'il est constitué par un dépôt de nickel. Il suffit alors d'enfiler et de fixer le cylindre sur un cylindre métallique pour obtenir le cylindre de grainage métallique souhaité qui se caractérise par une durée de service remarquable.

Le procédé conforme à l'invention est, par ailleurs, illustré plus en détail par la description qui va suivre de ces deux modes de réalisation et dans laquelle on se référera aux figures des dessins annexés qui font apparaître schématiquement les diverses étapes de réalisation.

Exemple 1 - Production d'un cylindre de grainage en silicone

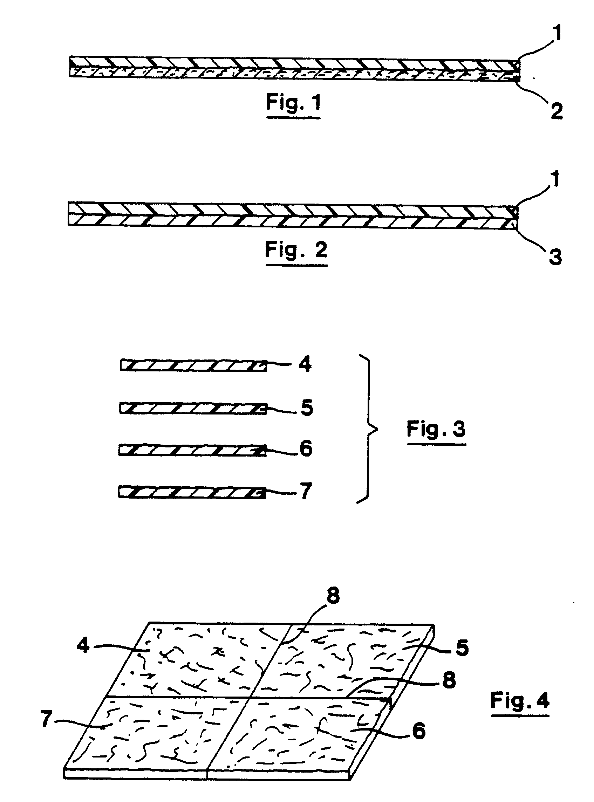

Comme montré à la fig. 1, on coule d'abord une couche 1 de résine de silicone réticulable sur un modèle de grainage à reproduire tel que par exemple une peau de cuire naturel 2. Après réticulation et durcissement de la couche de silicone 1 on sépare celle-ci, par arrachage, du modèle et on obtient ainsi une empreinte en silicone 1 représentant en négatif le grainage du modèle 2.

Avec cette empreinte en silicone 1, on graine ensuite par pression au moins une feuille 3 de polychlorure de vinyle plastifiée préalablement portée à une température de 200° C (fig. 2) et, après refroidissement, on sépare l'empreinte en silicone 1 des feuilles 3 dont la surface reproduit en positif le modèle 1. on soumet ensuite les feuilles 3 a un examen visuel et on découpe dans celles-ci des plages 4, 5 6, 7 de forme générale rectangulaire qui présentent un grainage régulier particulièrement intéressant (fig. 3). Comme montré à la fig. 4 les plages 4, 5, 6, 7 sont ensuite associées entre elles par soudage bords à bords pour former une surface grainée d'une superficie correspondant au moins à la surface latérale développée du cylindre de grainage à produire. Durant cet assemblage, il convient d'associer judicieusement les plages 4, 5, 6, 7 en tenant compte du sens de leur grainage (sens des poils du modèle) et de réaliser les soudures bords à bords de façon à réduire au minimum possible les joints 8 résultant des soudures. Il est bien évident que le nombre de plages peut être supérieur à quatre.

Dans l'étape suivante, il convient alors, conformément au procédé selon l'invention, de supprimer les joints 8 par une opération de postgrainage de ceux-ci.

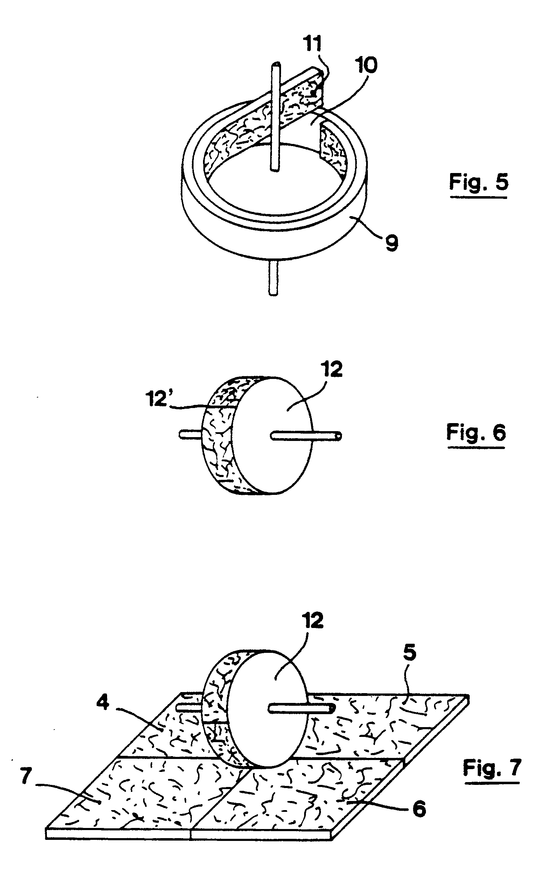

A cet effet, ainsi qu'il est montré à la fig. 5, on garnit la paroi latérale interne 10 d'un conformateur cylindrique approprié 9 d'une bande rapportée 11 découpée judicieusement dans une des feuilles 3 de polychlorure de vinyle plastifié grainées obtenues précédemment (fig. 2) la surface grainée positivement de la bande étant disposée vers l'intérieur. Le conformateur 9 et la bande rapportée 11 sont choisis de façon telle qu'après fixation et soudage bord à bord de la bande 11 dans le conformateur 9, la circonférence formée par la partie grainée de la bande 11 soit supérieure d'au moins 50 mm à la longueur des joints 8 de la surface obtenue par l'association des plages 4, 5, 6, 7 (fig. 4). En outre la largeur de la bande rapportée 11 est choisie de façon telle que celle-ci soit supérieure d'au moins 20 mm à la largeur des joints 8.

Après avoir garni le conformateur 9, on coule dans ce dernier une résine de polyester insaturé et on provoque le durcissement par réticulation de cette résine. Après démoulage de la résine coulée du conformateur 9, on obtient ainsi une roulette de grainage 12, comme représentée à la fig. 6, dont la surface de grainage est grainée en négatif et qui peut donc être exploitée ; comme montré à la fig. 7, pour postgrainer à chaud les joints 8 et ainsi provoquer leur disparition de le surface grainée positivement formée par les plages 5, 6, 7, 8. Durant le postgrainage des joints 8 il convient d'opérer de façon telle que le joint transversal 12' de la roulette de postgrainage 12 résultant du soudage bord à bord de la bande rapportée 11 dans le conformateur 9, ne soit pas mis en contact avec la surface à postgrainer, cet impératif pouvant être aisément respecté puisque la circonférence de la roulette de grainage 12 est supérieure à la longueur des joints 8 à postgrainer.

Durant cette opération de postgrainage des joints 8, les joints 8 sont disposés sur une surface d'appui arquée conformément à l'invention de façon à obtenir, lors du postgrainage, un effet de fondu de part et d'autre des joints 8.

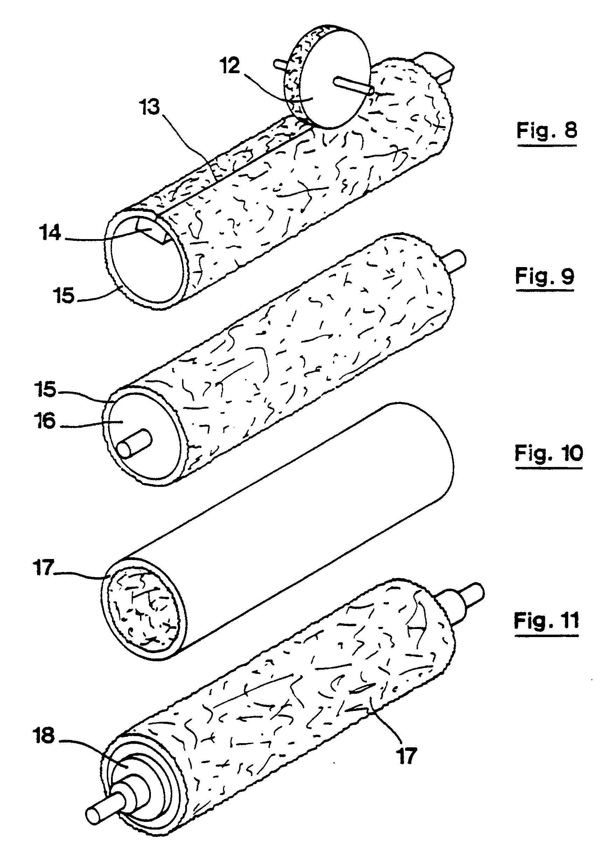

Après avoir postgrainer les joints 8, on assemble bord à bord deux extrémités de la surface postgrainée, de façon à former un manchon 15 dont le grainage positif est disposé vers l'extérieur et qui comporte un joint d'assemblage longitudinal 13 résultant de l'assemblage bord à bord comme représenté à la fig. 8.

Conformément au procédé selon l'invention, on procède alors au postgrainage à chaud du joint longitudinal 13 au moyen de la roulette de postgrainage 12 en veillant à ne pas amener le joint transversal 12' de cette roulette en contact avec la surface à postgrainer. Durant ce postgrainage il est avantageux de disposer le joint 13 à postgrainer sur une surface d'appui 14 arquée.

Après cette opération de postgrainage du joint longitudinal 13, on enfile le manchon 15 en polychlorure de vinyle plastifié sur un cylindre métallique 16 corne représenté à la fig. 9 et par rotation on recouvre sa surface externe grainée positivement d'une couche de résine silicone dont on provoque le durcissement de façon à former un manchon en silicone 17 grainé en négatif vers l'intérieur. On extrait ensuite le cylindre métallique 15 et on sépare le manchon 15 en polychlorure de vinyle plastifié du manchon en silicone 17 de façon à obtenir un manchon 17 en silicone grainé négativement vers l'intérieur comme représenté à la fig. 10.

Il suffit alors de retrousser le manchon en silicone 17 de façon à amener son grainage en négatif sur sa face extérieure puis de fixer celui-ci sur un cylindre métallique 18 pour obtenir le cylindre de grainage souhaité représenté à la fig. 11.

Exemple 2 - Production d'un cylindre de grainage métallique

On opère exactement comme dans l'exemple précédent jusqu'à et y compris l'opération de postgrainage du joint longitudinal 13 comme représentée à la fig. 8.

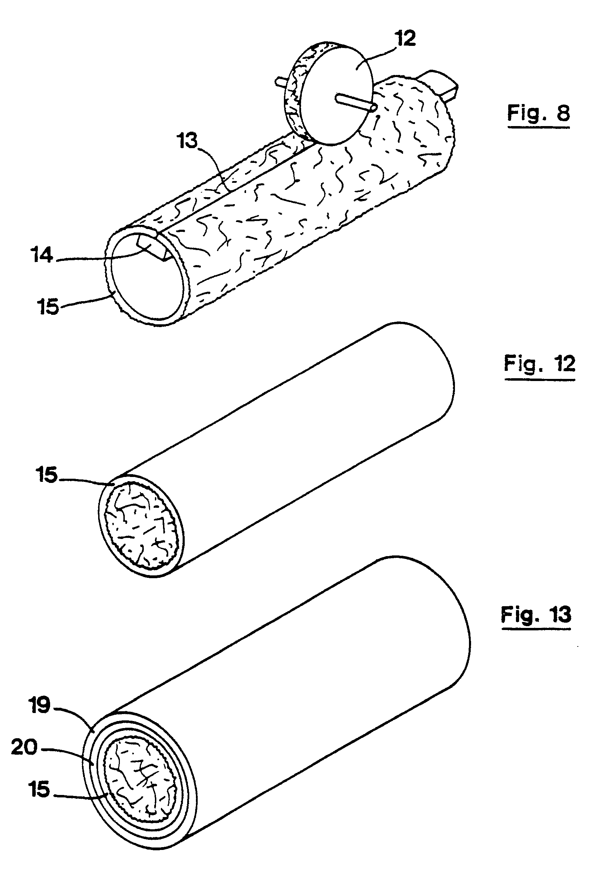

On procède alors au retroussement du manchon 15 en polychlorure de vinyle plastifié de façon à disposer son grainage positif ves l'intérieur comme représenté à la fig. 12 puis on applique celui-ci contre la paroi interne d'un cylindre métallique 19 par l'intermédiaire d'une couche de cire 20 préalablement déposée par centrifugation, comme montré à la fig. 13.

Au moyen d'un pistolet, on pulvérise alors de l'argent sur la face grainée interne du manchon en polychlorure de vinyle plastifié 15 afin de rendre celle-ci conductrice de l'électricité.

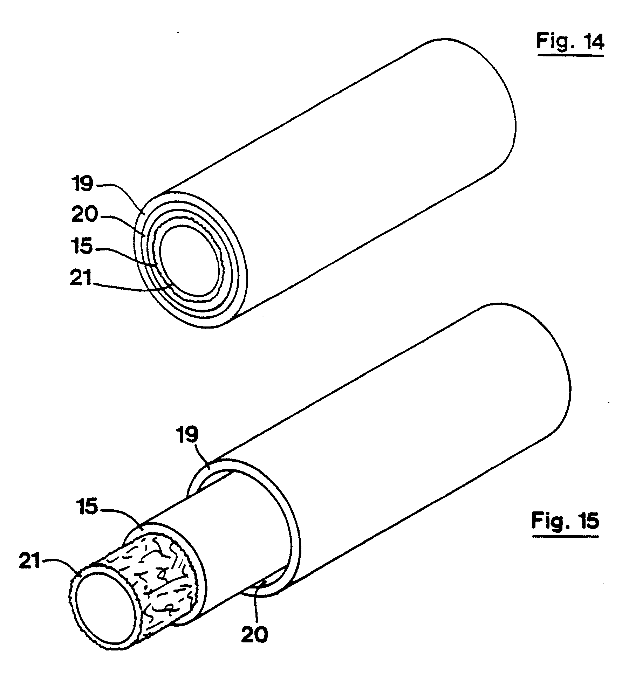

On procède alors au dépôt électrolytique de nickel sur la face interne argentée du manchon 15 jusqu'à une épaisseur de couche déposé de 0,7 mm puis au dépôt électrolytique de cuivre jusqu'à une épaisseur de 1 mm de façon à former un manchon métallique 21 (fig. 14) dont la face externe est grainée en négatif.

Il suffit alors de porter la paroi externe du cylindre métallique 19 à une température suffisante pour fondre la couche de cire 20 (fig; 15) de façon à permettre l'extraction du manchon retroussé 15 et du manchon métallique 21 du cylindre métallique 19 puis d'arracher le manchon retroussé 15 pour obtenir un manchon métallique 21 dont la surface externe en nickel reproduit en négatif le motif de grainage désiré.

On peut alors enfiler ce manchon 21 sur un cylindre métallique approprié pour obtenir un cylindre de grainage métallique se caractérisant par une durée de service remarquable lors de son exploitation pour le grainage en continu de films thermoplastiques chauds ou préchauffés au moins en surface à une température adéquate.

## Revendications

1. Procédé pour la production d'un cylindre de grainage à chaud de feuilles thermoplastiques comportant les étapes suivantes :

    a) réalisation d'une empreinte négative (1) du motif de grainage (2) à reproduire par coulage, durcissement et arrachage d'une résine de silicone déposée sur un modèle de grainage (2) tel qu'une peau de cuir naturel.

    b) production d'au moins une empreinte positive (3) par pressage à chaud de l'empreinte négative (1) sur une feuille de matière thermoplastique.

    c) découpage dans la ou les empreintes positives d'une série de plages de forme générale rectangulaires (4) (5) (6) (7) comportant les motifs choisis à reproduire par grainage et assemblage par soudage bords à bords des plages choisies pour réaliser une surface grainée positivement suffisante pour pouvoir recouvrir la surface du cylindre de grainage désiré, ladite surface comportant des joints de raccordement (8).

    d) assemblage bord à bord de deux extrémités de la surface grainée pour former un manchon grainé (15) positivement vers l'extérieur et comportent un joint de raccordement longitudinal (13).

    e) enfilage du manchon (15) sur un cylindre métallique (16) et prise d'une empreinte négative à partir de résine de silicone par rotation du cylindre métallique recouvert du manchon grainé positivement de façon à obtenir un manchon en résine de silicone grainé négativement vers l'intérieur (17).

    f) retroussement du manchon en résine de silicone (17) pour amener le grainage négatif sur la paroi externe du manchon et fixation du manchon retroussé sur un cylindre métallique (18) pour obtenir le cylindre de grainage désiré dans lequel, après les étapes c et d, les joints de raccordement (8) (13) sont postgrainés au moyen d'une roulette de postgrainage (12) en résine thermodurcissable reproduisant le grainage en négatif et dont la circonférence est supérieure à la longueur des joints à postgrainer, caractérisé en ce que le postgrainage des joints au moyen de la roulette de postgrainage (12) est réalisé en disposant les joints à postgrainer sur une surface de support (14) arquée transversalement.

2. Procédé selon la revendication 1 caractérisé en ce que la roulette de postgrainage (12) est obtenue en garnissant la paroi latérale interne (10) d'un conformateur cylindrique (9) d'une bande (11) rapportée de longueur appropriée découpée dans une empreinte positive obtenue à l'étape b, en coulant ensuite une résine thermodurcissable dans le conformateur et en démoulant la roulette (12) ainsi produite après durcissement de la résine thermodurcissable.

3. Procédé selon la revendication 1 caractérisé en ce que, lors du postgrainage des joints, on dispose la roulette de postgrainage (12) sur la surface à postgrainer de façon telle que le joint transversal (12') de la roulette découlant du raccordement bout à bout de la bande rapportée (11) disposée dans le conformateur (9) et utilisée pour sa production ne vienne pas en contact avec la surface à postgrainer.

4. Procédé selon la revendication 1 caractérisé en ce que la résine thermodurcissable utilisée pour réaliser la roulette de postgrainage (12) est une résine de polyester insaturé.

5. Procédé selon la revendication 1 caractérisé en ce que la feuille de matière thermoplastique utilisée à l'étape b est réalisée à partir d'une résine à base de chlorure de vinyle plastifié.

6. Procédé pour la production d'un cylindre de grainage à chaud de feuilles thermoplastiques comportant les étapes suivantes :

    a) réalisation d'une empreinte négative (1) du motif de grainage (2) à reproduire par coulage, durcissement et arrachage d'une résine de silicone déposée sur un modèle de grainage (2) tel qu'une peau de cuir naturel.

b) production d'au moins une empreinte positive (3) par pressage à chaud de l'empreinte négative (1) sur une feuille de matière thermoplastique.

c) découpage dans la ou les empreintes positives d'une série de plages de forme générale rectangulaires (4) (5) (6) (7) comportant les motifs choisis à reproduire par grainage et assemblage par soudage bords à bords des plages choisies pour réaliser une surface grainée positivement suffisante pour pouvoir recouvrir la surface du cylindre de grainage désiré, ladite surface comportant des joints de raccordement (8).

d) assemblage bord à bord de deux extrémités de la surface grainée pour former un manchon grainé (15) positivement vers l'extérieur et comportent un joint de raccordement longitudinal (13).

e) postgrainage des joints de raccordement (8) (13) au moyen d'une roulette de postgrainage (12) en résine thermodurcissable reproduisant le grainage en négatif et dont la circonférence est supérieure à la longueur des joints à postgrainer, lesdits joints à postgrainer étant disposés sur une surface de support (14) arquée transversalement caractérisé en ce qu'ensuite :

- on retrousse le manchon (15) en matière thermoplastique pour disposer le grainage positif vers l'intérieur du manchon;
- on applique le manchon retroussé contre la paroi interne d'un cylindre métallique (19) creux à l'intervention d'un adhésif fusible (20);
- on procède à la métallisation par électrolyse de la paroi interne du manchon retroussé de façon à produire un manchon métallique (21) reproduisant le grainage en négatif;
- on extrait le manchon retroussé (15) et le manchon métallique (21) formé par électrolyse du cylindre métallique (19) par fusion de l'adhésif (20);
- on sépare le manchon retroussé (15) du manchon métallique (21) par arrachage et,
- on enfile et fixe le manchon métallique (21) sur un cylindre métallique pour obtenir un cylindre de grainage métallique utilisable pour reproduire le grainage souhaité sur des feuilles thermoplastiques.

7. Procédé selon la revendication 6 caractérisé en ce que l'adhésif fusible est une cire.

8. Procédé selon la revendication 6 caractérisé en ce que la métallisation par électrolyse est obtenue par des dépôts successifs, de nickel et de cuivre après avoir rendu le manchon retroussé électroconducteur par pulvérisation d'argent sur son grainage.

## Claims

1. Process for the production of a roll for hot graining of thermoplastic sheets, comprising the following stages:

   a) production of a negative replica (1) of the graining pattern (2) to be reproduced by casting, curing and pulling away a silicone resin deposited onto a graining model (2) such as a natural leather skin,

   b) production of at least one positive replica (3) by hot press moulding the negative replica (1) onto a sheet of thermoplastic material

   c) cutting from the positive replica(s) a series of areas of general rectangular shape (4) (5) (6) (7) comprising the patterns chosen to be reproduced by graining and assembling the chosen areas by edge-to-edge welding to produce a positively grained surface which is sufficient to be capable of covering the surface of the desired graining roll, the said surface comprising connecting joints (8)

   d) assembling two ends of the grained area edge-to-edge to form an outwardly positively grained sleeve (15) comprising a lengthwise connecting joint (13)

   e) slipping the sleeve (15) over a metal roll (16) and making a negative replica from the silicone resin by rotating the metal roll covered with the positively grained sleeve so as to obtain a sleeve of silicone resin grained negatively inwards (17),

   f) rolling back the silicone resin sleeve (17) to bring the negative graining onto the outer wall of the sleeve and attaching the rolled-back sleeve onto a metal roll (18) to obtain the desired graining roll in which, after stages c and d, the connecting joints (8) (13) are postgrained by means of a postgraining roller (12) made of thermosetting resin reproducing the graining in negative and whose circumference is greater than the length of the joints to be postgrained, characterised in that the postgraining of the joints by means of the postgraining roller (12) is effected by arranging the joints to be postgrained on a transversely arched supporting surface (14).

2. Process according to Claim 1, characterised in that the postgraining roller (12) is obtained by lining the internal side wall (10) of a cylindrical former (9) with an added strip (11) of appropriate length cut from a positive replica obtained in stage b, and then casting a thermosetting resin into the former and demoulding therefrom the roller (12) thus produced after the curing of the thermosetting resin.

3. Process according to Claim 1, characterised in that, during the postgraining of the joints, the postgraining roller (12) is arranged on the surface to be postgrained so that the transverse joint (12') of the roller resulting from the end-to-end connection of the added strip (11) arranged in the former (9) and employed for its production does not come into contact with the surface to be postgrained.

4. Process according to Claim 1, characterised in that the thermosetting resin employed for producing the postgraining roller (12) is an unsaturated polyester resin.

5. Process according to Claim 1, characterised in that the sheet of thermoplastic material employed in stage b is produced from a resin based on plasticised vinyl chloride.

6. Process for the production of a roll for hot graining of thermoplastic sheets, comprising the following procedures:

a) production of a negative replica (1) of the graining pattern (2) to be reproduced by casting, curing and pulling away a silicone resin deposited onto a graining model (2) such as a natural leather skin,

b) production of at least one positive replica (3) by hot press moulding the negative replica (1) onto a sheet of thermoplastic material

c) cutting from the positive replica(s) a series of areas of general rectangular shape (4) (5) (6) (7) comprising the patterns chosen to be reproduced by graining and assembling the chosen areas by edge-to-edge welding to produce a positively grained surface which is sufficient to be capable of covering the surface of the desired graining roll, the said surface comprising connecting joints (8)

d) assembling two ends of the grained area edge-to-edge to form an outwardly positively grained sleeve (15) comprising a lengthwise connecting joint (13)

e) postgraining of the connecting joints (8) (13) by means of a postgraining roller (12) made of thermosetting resin reproducing the graining in negative and whose circumference is greater than the length of the joints to be postgrained, the said joints to be postgrained being arranged on a transversely arched supporting surface (14) characterised in that next :

- the sleeve (15) made of thermoplastic material is rolled back to arrange the positive graining towards the interior of the sleeve;

- the rolled-back sleeve is applied against the inner wall of a hollow metal roll (19) with the use of a hot-melt adhesive (20);

- the inner wall of the rolled-back sleeve is metallised by electrolysis so as to produce a metallic sleeve (21) reproducing the graining in negative;

- the rolled-back sleeve (15) and the metallic sleeve (21) formed by electrolysis of the metal roll (19) are extracted by melting the adhesive (20);

- the rolled-back sleeve (15) is separated from the metallic sleeve (21) by pulling off, and

- the metallic sleeve (21) is slipped onto and attached to a metal roll to obtain a metal graining roll which can be employed for reproducing the desired graining on thermoplastic sheets.

7. Process according to Claim 6, characterised in that the hot-melt adhesive is a wax.

8. Process according to Claim 6, characterised in that the electrolytic metallising is obtained by successive depositions of nickel and of copper after the rolled-back sleeve has been made electrically conductive by spraying silver onto its graining.

**Patentansprüche**

1. Verfahren zur Herstellung eines Zylinders zum Heißprägen von thermoplastischen Folien, das die folgenden Schritte umfaßt:

a) Herstellen eines Negativabdrucks (1) des Prägemotivs (2) zum Reproduzieren durch Gießen, Härten und Entnehmen eines auf einem Prägemodell (2), wie einer natürlichen Lederhaut, aufgebrachten Silikonharzes,

b) Herstellen wenigstens eines Positivabdrucks (3) durch Heißpressen des Negativabdrucks (1) auf eine Folie aus thermoplastischem Material,

c) Zerschneiden des oder der Positivabdrucke in eine Reihe von Bereichen mit im allgemeinen rechteckiger Form (4), (5), (6), (7), die die ausgewählten Motive zum Reproduzieren durch Prägen enthält und Verbinden durch Stumpfnahtschweißung der ausgewählten Bereiche, um eine positiv geprägte Oberfläche herzustellen, die ausreicht, um die Oberfläche des gewünschten Prägezylinders abdecken zu können, wobei die Oberfläche Verbindungsstellen (8) umfaßt,

d) Stumpfes Verbinden von zwei Enden der geprägten Oberfläche, um eine nach außen positiv geprägte Hülle (15) zu bilden, die eine Längsverbindungsstelle (13) umfaßt,

e) Aufstecken der Hülle (15) auf einen metallischen Zylinder (16) und Negativabdrucknahme ausgehend von Silikonharz durch Drehen des mit der positiv geprägten Hülle abgedeckten, metallischen Zylinders, um eine nach innen negativ geprägte Hülle (17) aus Silikonharz zu erhalten.

f) Umstülpen der Hülle aus Silikonharz (17) um die negative Prägung auf die Außenwand der Hülle zu bringen und Befestigen der umgestülpten Hülle auf einem metallischen Zylinder (18), um den gewünschten Prägezylinder zu erhalten, in dem, nach den Schritten c) und d), die Verbindungsstellen (8), (13) nachgeprägt werden mittels einer Nachprägerolle (12) aus wärmehärtbarem Harz, die die Negativprägung reproduziert und deren Umfang größer ist als die Länge der nachzuprägenden Verbindungsstellen, dadurch gekennzeichnet, daß die Nachprägung der Verbindungsstellen mittels der Nachprägerolle (12) durch Aufbringen der nachzuprägenden Verbindungsstellen auf einer transversal gewölbten Trägeroberfläche (14) durchgeführt wird.

2. Verfahren nach Anspruch 1, dadurch gekennzeichnet, daß die Nachprägerolle (12) erhalten wird durch Ausstatten der inneren Seitenwand (10) einer zylindrischen Formgebungsvorrichtung (9) mit einem Band (11), das hinsichtlich der geeigneten Länge paßt, ausgeschnitten aus einem, in Schritt b) erhaltenen, positiven Abdruck, indem man anschließend ein thermoplastisches Harz in die Formgebungsvorrichtung gießt und die so hergestellte Rolle (12) nach Härten des duroplastischen Harzes der Form entnimmt.

3. Verfahren nach Anspruch 1, dadurch gekennzeichnet, daß man beim Nachprägen der Verbindungsstellen die Nachprägerolle (12) auf der nachzuprägenden Oberfläche anbringt, derart, daß die transversale Verbindungsstelle (12') der Rolle, die von der stumpfen Verbindung des angesetzten Bandes (11) stammt, das in der Formgebungsvorrichtung (9) angebracht ist und für dessen Herstellung verwendet wird, nicht in Kontakt mit der nachzuprägenden Oberfläche kommt.

4. Verfahren nach Anspruch 1, dadurch gekennzeichnet, daß das zur Herstellung der Nachprägerolle (12) verwendete thermoplastische Harz ein ungesättigtes Polyesterharz ist.

5. Verfahren nach Anspruch 1, dadurch gekennzeichnet, daß die in Schritt b) verwendete Folie aus thermoplastischem Material aus einem Harz auf der Basis von plastifiziertem Vinylchlorid hergestellt wird.

6. Verfahren zur Herstellung eines Zylinders zum Heißprägen von thermoplastischen Folien, das die folgenden Schritte umfaßt:

a) Herstellen eines Negativabdrucks (1) des Prägemotivs (2) zum Reproduzieren durch Gießen, Härten und Entnehmen eines auf einem Prägemodell (2), wie einer natürlichen Lederhaut, angebrachten Silikonharzes,

b) Herstellen wenigstens eines Positivabdrucks (3) durch Heißpressen des Negativabdrucks (1) auf eine Folie aus thermoplastischem Material,

c) Zerschneiden des oder der Positivabdrücke in eine Reihe von Bereichen mit im allgemeinen rechteckiger Form (4), (5), (6), (7), die die ausgewählten Motive zum Reproduzieren durch Prägen enthält und Verbinden durch Stumpfnahtschweißung der ausgewählten Bereiche, um eine positiv geprägte Oberfläche herzustellen, die ausreicht, um die Oberfläche des gewünschten Prägezylinders abdecken zu können, wobei die Oberfläche Verbindungsstellen (8) umfaßt,

d) Stumpfes Verbinden von zwei Enden der geprägten Oberfläche, um eine nach außen positiv geprägte Hülle (15) zu bilden, die eine Längsverbindungsstelle (13) umfaßt,

e) Nachprägen der Verbindungstellen (8), (13) mittels einer Nachprägerolle (12) aus wärmehärtbarem Material, die die Negativprägung reproduziert und deren Umfang größer ist als die Länge der nachzuprägenden Verbindungsstellen, wobei die nachzuprägenden Verbindungsstellen auf einer transversal gewölbten Trägeroberfläche (14) angebracht sind,

dadurch gekennzeichnet, daß man anschließend:

- die Hülle (15) aus thermoplastischem Material umstülpt, um die Positivprägung ins Innere der Hülle zu bringen;
- die umgestülpte Hülle an der Innenwand eines hohlen Metallzylinders (19) mittels eines schmelzbaren Klebstoffs (20) anbringt;
- durch Elektrolyse eine Metallisierung der Innenwand der umgestülpten Hülle vornimmt, derart, daß eine Metallhülle (21) hergestellt wird, die die Negativprägung reproduziert;
- die umgestülpte Hülle (15) und die durch Elektrolyse des Metallzylinders (19) gebildete Metallhülle (21) durch Schmelzen des Klebstoffs (20) extrahiert;
- die umgestülpte Hülle (15) von der Metallhülle (21) durch Entnehmen trennt und
- die Metallhülle (21) auf einen Metallzylinder stülpt und befestigt, um einen metallischen Prägezylinder zu erhalten, der zur Reproduktion der gewünschten Prägung auf thermoplastischen Folien verwendet werden kann.

7. Verfahren nach Anspruch 6, dadurch gekennzeichnet, daß der schmelzbare Klebstoff ein Wachs ist.

8. Verfahren nach Anspruch 6, dadurch gekennzeichnet, daß die Metallisierung durch Elektrolyse aus nacheinanderfolgenden Nickel- und Kupfer-Ablagerungen erhalten wird, nachdem die umgestülpte Hülle durch Silberpulverisierung auf ihrer Prägung elektrisch leitend gemacht wurde.

Fig. 1

Fig. 2

Fig. 3

Fig. 4

**11**

**10**

**Fig. 5**

**9**

**12'**

**12**

**Fig. 6**

**12**

**5**

**4**

**7**

**6**

**Fig. 7**

**Fig. 8**

**Fig. 9**

**Fig. 10**

**Fig. 11**

**Fig. 8**

12

13

14

15

**Fig. 12**

15

**Fig. 13**

19

20

15

Fig. 14

19
20
15
21

19

15

21

Fig. 15

20